**Europäisches Patentamt**

**European Patent Office**

**Office européen des brevets**

(11) Veröffentlichungsnummer : **0 017 075**
**B1**

(12) **EUROPÄISCHE PATENTSCHRIFT**

(45) Veröffentlichungstag der Patentschrift :
19.05.82

(51) Int. Cl.³ : **H 02 K 5/22, H 02 K 11/00**

(21) Anmeldenummer : **80101419.2**

(22) Anmeldetag : **18.03.80**

(54) **Aussenläufermotor.**

(30) Priorität : **30.03.79 DE 2912802**

(43) Veröffentlichungstag der Anmeldung :
**15.10.80 (Patentblatt 80/21)**

(45) Bekanntmachung des Hinweises auf die Patenterteilung : **19.05.82 Patentblatt 82/20**

(84) Benannte Vertragsstaaten :
**CH DE GB IT SE**

(56) Entgegenhaltungen :
**CH - A - 547 030**
**DE - A - 2 040 465**
**DE - A - 2 535 609**
**DE - B - 1 930 359**
**DE - U - 7 828 796**
**FR - A - 2 219 559**
**FR - A - 2 326 070**
**US - A - 2 682 005**
**US - A - 2 279 214**
**US - A - 3 395 297**
**US - A - 3 484 860**
**US - A - 3 517 233**
**US - A - 3 539 850**
**US - A - 3 984 712**

(73) Patentinhaber : **SIEMENS AKTIENGESELLSCHAFT**
**Berlin und München**
**Postfach 22 02 61**
**D-8000 München 22 (DE)**

(72) Erfinder : **Deutloff, Norbert**
**Steigstrasse 3**
**D-8702 Thüngersheim (DE)**
Erfinder : **Pieper, Wolfgang**
**Kirchbühlstrasse 4**
**D-8700 Würzburg (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

## Außenläufermotor

Die Erfindung bezieht sich auf einen Außenläufermotor gemäß Oberbegriff des Anspruchs 1 ; ein derartiger Außenläufermotor ist durch die DE-B-19 30 359 bekannt.

Bei diesem Außenläufermotor ist die Leiterplatte am Kragen einer an der Stirnseite des Stator-Blechpaketes anliegenden Isolierstoffscheibe befestigt. Die auf der Leiterplatte aufgedruckten Kupferleitbahnen sind mit Schlitzen für die Verbindung mit den Wicklungsenden der Statorwicklung versehen ; einige Leiterbahnen weisen nach außen zum Rand der Leiterplatte hinragende Stege auf, in die die Schlitze für die Verbindung mit den Wicklungsenden radial eingelassen sind. Die aufgedruckten Kupferleitbahnen dienen ausschließlich dazu, die Motorwicklungsenden an eine Stelle zusammenzuführen, an der das äußere Motoranschlußkabel angelötet ist.

Ein weiterhin bekannter Außenläufermotor (DE-U-78 28 796) ist dadurch gekennzeichnet, daß am Kragen einer an der Stirnseite des Blechpaketes anliegenden Isolierendscheibe eine Leiterplatte mit aufgedruckten Leiterbahnen befestigt ist, die zusätzlich zur Halterung eines Temperaturwächters für die Motorwicklung dient, der mit seinen äußeren elektrischen Anschlußpunkten an entsprechend auf der Leiterplatte in der Nähe des Temperaturwächters geführte, aufgedruckte Leiterbahnen angelötet ist.

Aufgabe der vorliegenden Erfindung ist es, einen gegenüber den bekannten Außenläufermotoren einfacher montierbaren sowie servicefreundlicheren Kleinmotor zu schaffen.

Diese Aufgabe kann erfindungsgemäß bei einem Außenläufermotor der eingangs genannten Art durch die kennzeichnende Lehre gemäß Anspruch 1 gelöst werden ; dadurch ist es möglich, bei der Fertigung und Montage des gesamten Kleinmotors einerseits die Leiterplatte mit der äußeren Motoranschlußleitung in Lagerschild vorzumontieren und andererseits die Motoranschlußenden beim Wickeln des Statorpaketes eindeutig festzulegen und bei der gegenseitigen Montage von Lagerschild und Stator-Blechpaket gleichzeitig auf einfache und sichere Weise die Leiterplatte mit dem verbundenen äußeren Motoranschlußkabel mit der Statorwicklung elektrisch und mechanisch zu verbinden. Gesonderte Fertigungsvorgänge zur richtigen Halterung der Kontaktstifte nach dem Wickelvorgang erübrigen sich.

Insbesondere zur Gewährleistung großer Kriechstrecken bei einem Lagerschild aus elektrisch leitendem Material ist es vorteilhaft, daß die Leiterplatte über Distanzstücke mit dem Lagerschild verbunden ist ; die Distanzstücke werden zweckmäßigerweise einstückig an das Lagerschild angeformt, beispielsweise mit diesem zusammen gegossen. Zur sicheren und einfachen Kontaktierung zwischen den Enden der Statorwicklung einerseits und der Leiterplatte andererseits ist nach einer Ausgestaltung der Erfindung vorgesehen, daß die für die Verbindung mit den Wicklungsenden der Statorwicklung vorgesehenen Kontaktstifte durch Eindrücken in dazu im Kragen der Isolierendscheibe vorgesehene Öffnungen gehaltert sind.

Durch die US-A-3 984 712 ist ein Innenläufermotor bekannt, dessen äußere Anschlußleitung an eine Printplatte angelötet ist, deren Kontakt mit der Motorwicklung über Kontaktbuchsen erfolgt, die an der Printplatte gehaltert sind und zusammen mit der Printplatte auf Kontaktstifte aufsteckbar sind, die mit den Motorwicklungsenden verbunden sind ; die erfindungsgemäße Lösung kann dadurch jedoch u. a. deswegen nicht nahegelegt werden, da die bekannte Anordnung weder eine Isolierendscheibe noch die Halterung der Printplatte an einem Lagerschild offenbart und die Kontaktstifte von Kunststoffkappen gehalten werden, die erst nach Fertigstellung der Wicklung über die Wickelköpfe gestülpt und derart gehalten werden ; dies bedingt u.a. einen gesonderten Justiervorgang für die richtige Halterung der Kontaktstifte und einen gesonderten Kontaktierungsvorgang zwischen den Kontaktstiften und den Wicklungsenden nach dem eigentlichen Wicklungsvorgang der Statorwicklung.

Ein Hinweis auf die Erfindung kann auch nicht der weiterhin bekannten FR-A-2 219 559 entnommen werden ; diese Druckschrift offenbart lediglich eine elektrische Innenläufer-Maschine, die dadurch wahlweise für Gleich- oder Wechselstrom verwendbar ist, daß von außen auf die Stirnseite des Lagerschildes unterschiedliche Montageeinheiten für Wechselstrom oder für Gleichstrom aufsteckbar sind ; dazu weist der Lagerschild nach axial außen weisende gehäusefeste Kontaktstifte auf, die an ihrem inneren Ende nach der Fertigstellung der Statorwicklung mit den Motorwicklungsenden zu verbinden sind. Die den Kontaktstiften entsprechenden Kontaktbuchsen werden von einer Isolierplatte gehalten, die ihrerseits und der als Deckel ausgebildeten und am Lagerschild angeschraubten Montageeinheit befestigt ist.

Die Erfindung sowie weitere vorteilhafte Ausgestaltungen werden im folgenden anhand eines schematisch dargestellten Ausführungsbeispiels der Erfindung in der Zeichnung näher erläutert. Darin zeigen :

Fig. 1 in einem Längsschnittbild das Stator-Blechpaket und einen noch nicht mit dem Stator-Blechpaket zusammenmontierten Lagerschild eines Außenläufermotors,

Fig. 2 gemäß dem Schnittverlauf II-II aus Fig. 1 eine stirnseitige Draufsicht auf die Leiterplatte,

Fig. 3 eine stirnseitige Draufsicht auf das Stator-Blechpaket mit axial vorstehenden im Kragen der Isolierendscheibe gehalterten Kontaktstiften vor dem Zusammenbau mit dem Lagerschild.

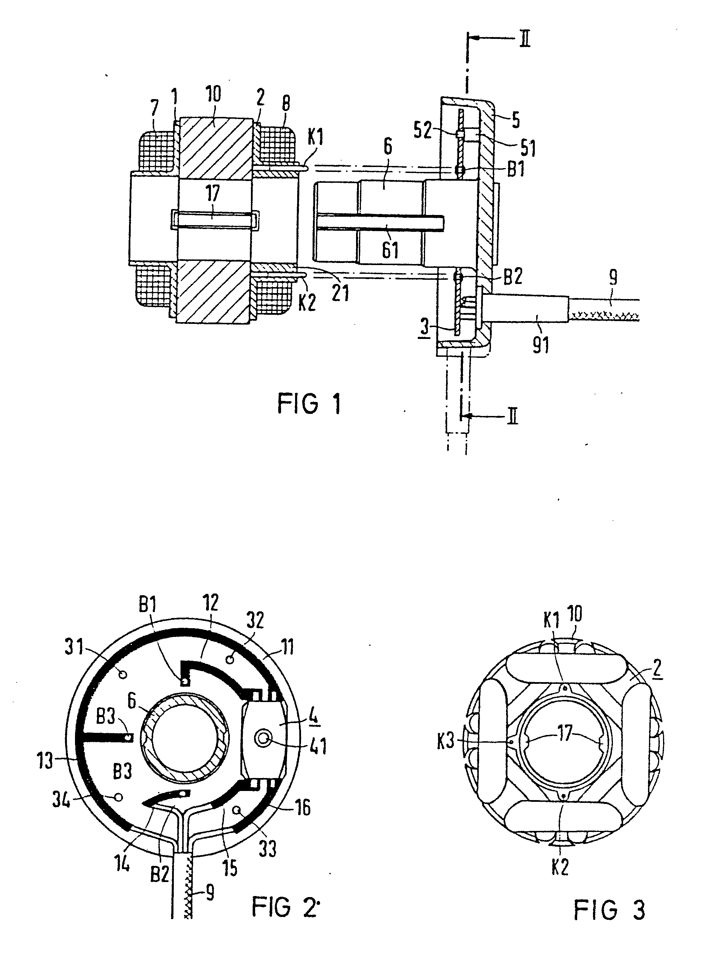

Fig. 1 zeigt den Stator eines Außenläufermotors. Über die beiden Stirnseiten des Stator-Blechpaketes 10 ragen die Wickelköpfe 7, 8 der gewickelten Statorwicklung. Die Wickelköpfe 7, 8 sind zu den Stirnseiten des Stator-Blechpaketes 10 durch je eine Isolierendscheibe 1 bzw. 2 isoliert.

In der rechten Hälfte der Fig. 1 ist ein Lagerschild 5 mit einem einstückig angeformten Innenrohr 6 dargestellt. Das Lagerschild 5 dient insbesondere zur Befestigung des gesamten Außenläufermotors. Bei der gegenseitigen Montage von Lagerschild 5 und Stator-Blechpaket 10 wird das Innenrohr 6 mit dem angeformten Lagerschild 5 in die Statorbohrung des Stator-Blechpaketes eingeschoben und durch kraft- und/oder formschlüssigen Sitz gehalten. Das Innenrohr 6 nimmt dann die Wellenlager für die sogenannte Außenglocke auf.

Im fertig montierten Zustand von Lagerschild 5 und Stator-Blechpaket 10 werden die rechten Wickelköpfe 8 der Statorwicklung teilweise von dem Lagerschild 5 axial und radial übergriffen ; dazu ist das Lagerschild 5 topfförmig ausgeführt. An der Innenseite des Lagerschildes 5 ist in Abstand zu dessen Stirn- und übergreifenden Außenseiten die Leiterplatte 3 gelagert. Zur Halterung der Leiterplatte 3 sind an die Innenstirnseite des Lagerschildes 5 Distanzstücke 51 angeformt, an denen die Leiterplatte 3 befestigt ist ; im einzelnen können beispielsweise am Umfang der Leiterplatte verteilt Löcher 31 bis 34 (Fig. 2) vorgesehen sein, in die endseitige Zapfen 52 der Distanzstücke 51 im Sinne einer Preßsitzhalterung der Leiterplatte 3 eingedrückt werden.

Wie insbesondere aus Fig. 2 ersichtlich, ist die Leiterplatte 3 an ihrer der inneren Stirnseite des Lagerschildes 5 zugewandten Seite mit aufgedruckten Kupferleitbahnen 11-16 versehen. Die Kupferleitbahnen 11-16 führen, wie aus Fig. 2 ersichtlich, an der unteren Außenseite der Leiterplatte 3 zu einer gemeinsamen Stelle, an die das äußere Motoranschlußkabel 9 hingeführt und beispielsweise über Lötverbindungen elektrisch verbunden ist. Die Leiterplatte 3 und die Kupferleitbahnen 11-16 sind dazu in zweckmäßiger Weise zum Anschluß des äußeren Motoranschlußkabels 9 mit Einstecklöchern für die anschließend zu verlötenden Kabelenden des in der Zeichnung verwendeten vieradrigen Motoranschlußkabels 9 versehen. Gemäß der Ausführung nach Fig. 1 ist das Motoranschlußkabel 9 über eine stirnseitige Kabeldurchführungsöffnung im Lagerschild 5 zu dem gemeinsamen Anschlußpunkt auf der Leiterplatte 3 geführt. Zur isolierenden und knickschützenden Durchführung durch das Lagerschild 5 ist in der entsprechenden Öffnung des Lagerschildes 5 eine Gummitülle 91 arretiert, durch dessen Innenbohrung das Motoranschlußkabel 9 hindurchgesteckt ist. In Alternative zu der stirnseitigen Durchführung des Motoranschlußkabels 9 kann auch eine radiale Einführung in die topfförmige Seitenwand des Lagerschildes 5 vorgesehen sein. Diese Alternativ-Ausführung eines radialen Aus- bzw. Eintritts des Motoranschlußkabels ist in Fig. 1 in gestrichelter Ausführung angedeutet.

Gemäß Fig. 2 ist auf der rechten Seite der Leiterplatte 3 ein Temperaturwächter 4 mit seinen vier Anschlußpunkten an die entsprechenden Leiterbahnen 11, 12 bzw. 15, 16 angelötet und gehalten. Der Temperaturwächter 4 liegt rückseitig an der Leiterplatte 3 an und ist an seiner gegenüberliegenden Stirnseite mit einem Schaltknopf 41 versehen, mit Hilfe dessen der Temperaturwächter 4 nach einem Ansprechen im Überlastungsfall des Motors von außen mit Hand wieder eingeschaltet werden kann ; zur Betätigung des Schaltknopfes 41 ist in hier nicht dargestellter Weise in dem Lagerschild 5 eine entsprechende, ggf. durch eine isolierende, jedoch elastische Gummihaut verschlossene Betätigungsöffnung vorzusehen. Diese Gummihaut kann auch vor der Montage über den Thermowächter 4 einschließlich Schaltknopf 41 gespannt sein.

Die für die Verbindung mit den Wicklungsenden der Statorwicklung vorgesehenen Enden der Kupferleitbahnen 12 bis 16 der Leiterplatte 3 sind mit Kontaktbuchsen B1 ; B2 ; B3, teilweise über radial verlaufende Kupferleitungsstege elektrisch verbunden. Den Kontaktpunkten B1 ; B2 ; B3 sind entsprechende freie Enden von Kontaktstiften K1 ; K2 ; K3 zugeordnet, die gemäß Fig. 1 in axial gerichtete Öffnungen eines Kragens 21 gehalten gesteckt sind, der als axial vorstehender Teil Bestandteil der Isolierendscheibe 2 ist und den Wickelkopf 8 radial zum Innenrohr 6 hin isoliert, das er umfaßt.

Bei der gegenseitigen Montage von Lagerschild 5 und angeformtem bzw. verbundendem Innenrohr 6 mit dem bewickelten Stator-Blechpaket kommen die Kontaktstifte K1 ; K2 ; K3 und die entsprechenden Kontaktbuchsen B1 ; B2 ; B3 zwangsläufig in Kontaktnahme, indem die freien Enden der Kontaktstifte K1 ; K2 ; K3 in die Kontaktbuchsen B1 ; B2 ; B3 eingesteckt werden. Zur sicheren Zuordnung und Ausrichtung der gegenseitigen Kontaktierung kann dazu eine außen auf dem Innenrohr 6 vorgesehene axiale Keilnut 61 mitbenutzt werden, die in einen entsprechenden Keil 17 an der Innenfläche der Statorbohrung des Stator-Blechpaketes 10 zur Ausrichtung von Innenrohr 6 und Stator-Blechpaket 10 bei der Montage eingreift.

Durch die erfindungsgemäße Ausbildung des Kleinmotors ist es möglich, einerseits das Stator-Blechpaket zu bewickeln und die Wicklungsenden der Statorwicklung durch Verbindung mit den Kontaktstiften K1 ; K2 ; K3, beispielsweise durch Anlöten oder Anklemmen, eindeutig festzulegen und andererseits das Lagerschild mit der darin befestigten Leiterplatte und dem angelöteten und durch das Lagerschild hindruchgeführten Motoranschlußkabel vorzumontieren und dann beide Teile durch einfaches Ineinanderstecken elektrisch und mechanisch in einem Arbeitsgang zu verbinden. Gleichzeitig ergibt sich durch diese Lösung die Möglichkeit, im Reparaturfalle, beispielsweise zur Auswechselung des Thermowächters, nicht nur die mechanische sondern auch die elektrische Verbindung zu lösen und ohne weitere Maßnahmen anschlie-

Bend wiederherzustellen.

**Ansprüche**

1. Außenläufermotor mit zwischen Stator-Blechpaket und Wickelkopf der Statorwicklung angeordneter Isolierendscheibe (2) mit einem axialen, ein in die Bohrung des Statorblechpaketes (10) eingeführtes Wellenende oder Innenrohr umfassenden Kragen (21) sowie mit einer zwischen einem Wickelkopf (8) und dem gegenüberliegenden Lagerschild (5) angeordneten Leiterplatte (3) mit darauf befestigten, insbesondere aufgedruckten Leiterbahnen (12-16), die einerseits mit den Wicklungsenden der Statorwicklung und andererseits mit einem äußeren Motoranschlußkabel (9) verbunden sind, dadurch gekennzeichnet, daß die Leiterplatte (3) mit dem nach außen herausgeführten Motoranschlußkabel (9) an dem Lagerschild (5) vormontiert und mit festen Kontaktbuchsen (B1 ; B2 ; B3) versehen ist, die bei der Montageverbindung zwischen Lagerschild (5) und Stator-Blechpaket (10) zwangsläufig auf die freien Enden korrespondierender, mit den Wicklungsenden der Statorwicklung verbundener Kontaktstifte (K1 ; K2 ; K3) aufsteckbar sind, die in axialen Öffnungen der Stirnseite des Kragens bis auf ein aus der Öffnung stirnseitig herausragendes freies Ende gehaltert sind.

2. Außenläufermotor nach Anspruch 1, dadurch gekennzeichnet, daß die Leiterplatte (3) über Distanzstücke (51) mit dem Lagerschild (5) verbunden ist.

3. Außenläufermotor nach Anspruch 2, dadurch gekennzeichnet, daß die Distanzstücke (51) einstückig an das Lagerschild (5) angeformt sind.

4. Außenläufermotor nach einem der Ansprüche 1 bis 3, dadurch gekennzeichnet, daß die Kontaktstifte (K1 ; K2 ; K3) durch Eindrücken in die im Kragen der Isolierendscheibe (2) vorgesehenen Öffnungen gehalten sind.

5. Außenläufermotor nach einem der Ansprüche 1 bis 4, dadurch gekennzeichnet, daß auf der Leiterplatte (3) ein Thermowächter (4) für die Statorwicklung elektrisch und mechanisch angeschlossen ist.

6. Außenläufermotor nach Anspruch 5, dadurch gekennzeichnet, daß der Thermowächter (4) mit einem von außen betätigbaren, insbesondere wieder einschaltbaren Schaltknopf (41) versehen ist.

**Claims**

1. An outer rotor motor comprising an insulating end plate (2) arranged between the stator plates and the winding head of the stator winding, with an axial collar (21) which embraces a shaft end or inner tube inserted into the bore in the stator plates, and with a circuit board (3) arranged between a winding head (8) and the opposite bearing plate (5), with conductor paths (12-16) attached thereto, and in particular printed thereupon, and which are connected to the winding ends of the stator winding and to an outer motor connection cable (9), characterized in that the circuit board (3) with the outwards directed motor connection cable (9) is pre-mounted on the bearing plate (5) and is provided with fixed contact bushes (B1 ; B2 ; B3) which, during the assembly connection between bearing plate (5) and stator plates (10) can be automatically plugged onto the free ends of corresponding contact pins (K1 ; K2 ; K3) which are connected to the ends of the stator winding and which are held in axial openings in the end of the collar apart from a free end which projects from the end of the opening.

2. An outer rotor motor as claimed in claim 1, characterized in that the circuit board (3) is connected to the bearing plate (5) via spacing components (51).

3. An outer rotor motor as claimed in claim 2, characterized in that the spacing components (51) form an integral part of the bearing plate (5).

4. An outer rotor motor as claimed in one of the claims 1 to 3, characterized in that the contact pins (K1 ; K2 ; K3) are held in position impressed into the openings provided in the collar of the insulating end plate (2).

5. an outer rotor motor as claimed in one of the claims 1 to 4, characterized in that a heat monitor (4) for the stator winding is connected both electrically and mechanically on the circuit board (3).

6. An outer rotor motor as claimed in claim 5, characterized in that the heat monitor (4) is provided with a switching button (41) which can be operated from the exterior and which, in particular, can be reactuated.

**Revendications**

1. Moteur à rotor extérieur à disque isolant (2) disposé entre le paquet de tôles statorique et la tête de bobine de l'enroulement statorique, du type comportant une collerette axiale (21) comprenant un bout d'arbre ou tube intérieur introduit dans le perçage du paquet de tôles statorique, ainsi qu'une plaque à conducteurs (3) disposée entre une tête de bobine (8) et le flasque-palier (5) qui lui fait face et portant des pistes conductrices, plus particulièrement des pistes conductrices imprimées qui sont reliées d'une part aux extrémités des bobines de l'enroulement statorique et d'autre part à un câble extérieur (9) de raccordement du moteur, caractérisé par le fait que la plaque à conducteurs (3) est montée à l'avance sur le flasque-palier (5) avec le câble de raccordement (9) du moteur, qui est passé à l'extérieur, et est pourvue de douilles de contact fixes (B1 ; B2 ; B3) qui, lors de la liaison à l'assemblage entre le flasque-palier (5) et le paquet de tôles statorique (10), s'enfichent impérativement sur les extrémités libres de chevilles de contact correspondantes (K1 ; K2 ; K3) qui sont reliées aux extrémités des bobines de l'enroulement statorique et qui sont maintenues dans des ouvertures axiales de la face frontale de la collerette, à l'exception d'une extrémité libre qui déborde frontalement l'ouverture.

2. Moteur à rotor extérieur selon la revendication 1, caractérisé par le fait que la plaque à conducteurs (3) est reliée au flasque-palier (5) par l'intermédiaire d'entretoises (51).

3. Moteur à rotor extérieur selon la revendication 2, caractérisé par le fait que les entretoises (51) sont venues d'une pièce avec le flasque-palier (5).

4. Moteur à rotor extérieur selon l'une des revendications 1 à 3, caractérisé par le fait que les chevilles de contact (K1 ; K2 ; K3) sont maintenues par enfoncement dans les ouvertures prévues dans la collerette du disque isolant (2).

5. Moteur à rotor extérieur selon l'une des revendications 1 à 4, caractérisé par le fait qu'à la plaque à conducteurs (3) est relié électriquement et mécaniquement un dispositif de contrôle thermique (4) pour l'enroulement statorique.

6. Moteur à rotor extérieur selon la revendication 5, caractérisé par le fait que le dispositif de contrôle thermique (4) est pourvu d'un bouton de commutation (41), plus particulièrement d'un bouton de réenclenchement, manœuvrable de l'extérieur.

FIG 1

FIG 2

FIG 3